Europäisches Patentamt

European Patent Office

Office européen des brevets

(11) Publication number: **0 510 514 A1**

# EUROPEAN PATENT APPLICATION

(21) Application number: **92106548.8**

(22) Date of filing: **15.04.92**

(51) Int. Cl.5: **G06F 9/44**

(30) Priority: **24.04.91 JP 119152/91**
**25.04.91 JP 121935/91**

(43) Date of publication of application:
**28.10.92 Bulletin 92/44**

(84) Designated Contracting States:
**DE FR GB**

(71) Applicant: **CASIO COMPUTER COMPANY LIMITED**
**6-1, 2-chome, Nishi-Shinjuku**
**Shinjuku-ku Tokyo(JP)**

(72) Inventor: **Oka, Yoshiharu, Hamura R&D Center**
**Casio Computer Co.,Ltd, 3-2-1, Sakae-cho**
**Hamura-shi, Tokyo 190-11(JP)**

(74) Representative: **Patentanwälte Grünecker,**
**Kinkeldey, Stockmair & Partner**
**Maximilianstrasse 58**
**W-8000 München 22(DE)**

(54) **Automatic flowchart generator.**

(57) A PS processing device (11) includes an RPS file for defining a processing sequence in correspondence with units of processing, and sequentially processes data in units of processing in accordance with the processing sequence stored in the RPS file. A flow chart forming device (13) reads out graphic block patterns from the block pattern memory (12) in units of processing, and sequentially connects the respective block patterns in accordance with the processing sequence stored in the RPS file. In addition, the flow chart forming device (13) respectively adds processing names to the connected respective graphic blocks and set them in a development buffer (15). The data in the development buffer (15) is supplied to a printing unit in the PS processing device (11) to be printed out.

FIG.1

The present invention relates to a data processing apparatus for analyzing a series of processing programs developed beforehand by system design in an office computer or the like, thus automatically drawing a flow chart graphically representing the processing outline.

In a data processing apparatus such as an office computer, work processing operation programs corresponding to the work contents of a user are generally designed in advance. When the processing contents are to be checked later, a program list is output or a flow chart graphically representing the processing outline is manually drawn.

A program list, however, is too technical and hence difficult for general users to understand. On the other hand, drawing of a flow chart takes a lot of time and labor even for a system engineer, demanding a very laborious task.

It is an object of the present invention to automatically draw a flow chart as a graphic representation of data processing contents in accordance with definition information defining the data processing contents, thereby allowing easy understanding of the data processing contents.

In order to achieve the above object, according to the present invention, there is provided a data processing apparatus for processing data in accordance with a predetermined program, comprising: (a) processing sequence storage means for storing names of various units of processing, and a sequence of processing the respective units of processing; (b) processing program storage means for storing predetermined processing programs in correspondence with the respective units of processing; (c) program execution means for, in response to a start of data processing, sequentially reading out the processing programs, stored in said processing program storage means in correspondence with the respective units of processing stored in said processing sequence means, in accordance with the sequence stored in said processing sequence storage means, decoding the read processing programs, and executing data processing in accordance with the programs; (d) block pattern storage means for storing one basic block pattern common to the respective units of processing; (e) forming means for, in response to a start of flow chart formation, forming processing block patterns by adding the names of the units of processing to the basic block pattern in the respective units of processing stored in said processing sequence storage means; and (f) output means for sequentially connecting the processing block patterns, formed in accordance with the respective units of processing stored in said processing sequence storage means, in accordance with the sequence stored in said processing sequence storage means, and outputting the resultant block patterns on a recording paper sheet.

According to the present invention, since a flow chart graphically representing a processing outline can be automatically drawn, there is no need to output a program list or manually draw a flow chart as in the prior art. That is, a flow chart which can be understood by anybody can be very easily obtained. Especially, if sets of graphic patterns are formed or processing flow charts are graphically drawn in units of processing, the resultant illustration is easier to understand.

This invention can be more fully understood from the following detailed description when taken in conjunction with the accompanying drawings, in which:

Fig. 1 is a block diagram showing the arrangement of a main part of a data processing apparatus according to the first embodiment of the present invention;

Fig. 2 is a block diagram showing the arrangement of a PS processing device 11;

Fig. 3 is a view showing various block patterns stored in a block pattern memory 12;

Fig. 4 is a view showing a detailed sequence definition set in an RPS file 27-1;

Fig. 5 is a view showing a detailed sequence definition set in a PS file 27-2;

Fig. 6 is a view showing detailed definition contents corresponding to an execution PS name "PS01";

Fig. 7 is a view showing detailed definition contents corresponding to an execution PS name "PS02";

Fig. 8 is a view showing detailed definition contents corresponding to an execution PS name "PS04";

Fig. 9 is a view showing a state wherein the contents of the PS file 27-2 are accessed in accordance with the sequence definition of the RPS file 27-1;

Fig. 10 is a view showing a state wherein flow chart forming processing is performed on the basis of the definition contents in addition to PS processing;

Fig. 11 is a flow chart showing the main routine of PS processing;

Fig. 12 is a flow chart showing flow chart forming processing;

Figs. 13A and 13B are flow charts showing part of PS block forming processing;

Fig. 14 is a view showing a drawn flow chart;

Fig. 15 is a block diagram showing the arrangement of a main part of a data processing apparatus according to the second embodiment of the present invention;

Fig. 16 is a view showing various block patterns stored in a block pattern memory 120;

Fig. 17 is a view a detailed sequence definition set in an RPS file 27-1;

Fig. 18 is a flow chart showing flow chart forming processing;

Fig. 19 is a flow chart showing processing block forming processing;

Figs. 20A and 20B are flow charts showing part of IF statement processing;

Fig. 21 is a view showing a state wherein a decision block of an IF statement is arranged in a development buffer 150;

Fig. 22 is a view showing a printed state of a processing flow chart formed in accordance with sequence definitions; and

Figs. 23A and 23B are views showing a state wherein the output positions of graphic patterns respectively following different conditions of a conditional branch are automatically changed in accordance with the number of graphic patterns following each condition.

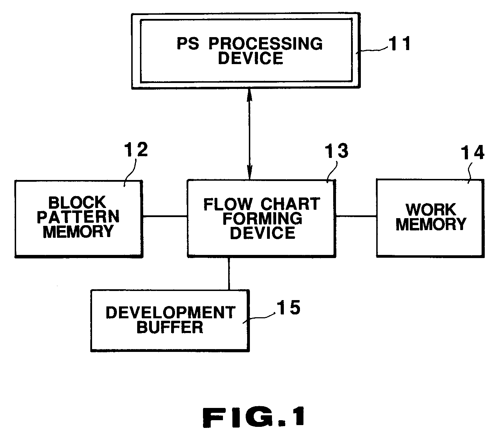

The first embodiment of the present invention will be described below with reference to Figs. 1 through 14.

Fig. 1 is a block diagram showing the arrangement of a main part of a data processing apparatus.

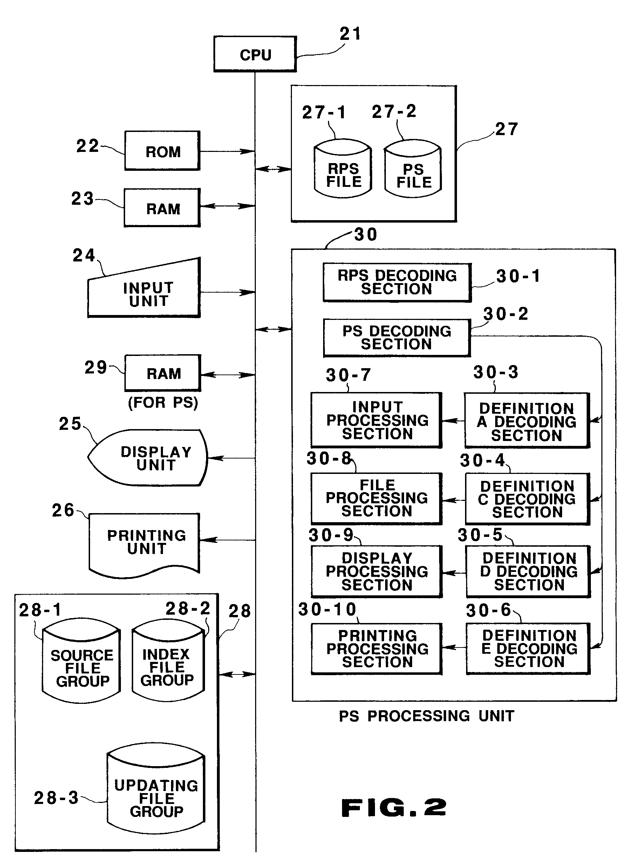

A PS processing device 11 (to be described in detail later with reference to Fig. 2) serves to sequentially execute processing based on various definition contents (the contents of processing programs), which are arbitrarily set in advance, in accordance with processing sequences. In this embodiment, processing of this type will be referred to as PS processing hereinafter.

A block pattern memory 12 is designed to store various types of graphic block patterns used to form a processing flow chart. More specifically, the following graphic block patterns are prestored in the block pattern memory 12: a start block, an end block, a processing block (basic block), an input block, a display block, a print block, a source file block, a disk block, an updating file block, and the like. Note that the graphic blocks in the block pattern memory 12 may be permanently prepared by a manufacturer or arbitrarily prepared by a user.

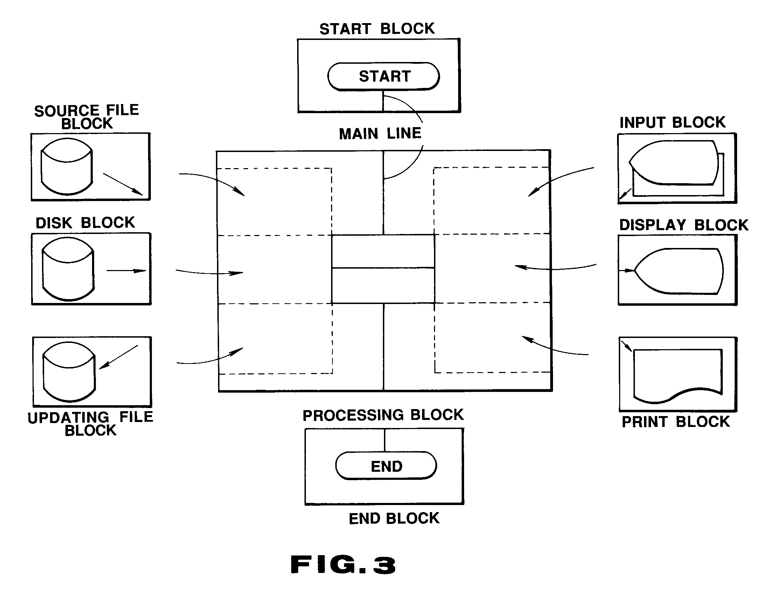

Fig. 3 shows various types of block patterns stored in the block pattern memory 12. A start block pattern is designed such that a character string "START" is inserted in a symbolic pattern representing the start of processing, and a main line to be connected to a lower block pattern is added to the symbolic pattern. A processing block pattern (basic block pattern) is designed such that an elongated rectangle is formed as a symbolic pattern in the middle of the block pattern, and main lines to be respectively connected to upper and lower block patterns are added to the symbolic pattern, which is divided into upper and lower portions. In the processing block pattern, input/output block patterns graphically representing the types of input/output devices, i.e., an input block pattern, a display block pattern, and a print block pattern, can be arranged on the right side of the symbolic pattern in accordance with the type of an input/output device to be used. The input block pattern, the display block pattern, and the print block pattern are respectively arranged at predetermined fixed positions with respect to the processing symbolic pattern. More specifically, the input block pattern is arranged at the upper right position of the processing symbolic pattern; the display block pattern, the central right position; and the print block pattern, the lower right position. In this case, the input block pattern is constituted by a symbolic pattern representing an input operation, and an arrow pattern added thereto. This arrow pattern indicates that data flows from the input block to the processing symbolic pattern (in the input direction). The display block pattern is constituted by a symbolic pattern representing a display operation, and an arrow pattern added thereto. This arrow pattern indicates that data flows from the processing symbolic pattern to the display block (in the output direction). Furthermore, the print block pattern is constituted by a symbolic pattern representing a printing operation, and an arrow pattern added thereto. This arrow pattern indicates that data flows in the output direction.

On the other hand, in the processing block pattern, a source file pattern, a disk block pattern, and an updating file block pattern can be arranged on the left side of the symbolic pattern in accordance with the type of file to be used. These file block patterns are arranged at predetermined fixed positions with respect to the processing symbolic pattern. More specifically, the source file block pattern is arranged at the upper left position of the processing symbolic pattern; the disk block pattern, the central left position; and the updating file block pattern, the lower left position. In this case, the source file block pattern, the disk block pattern, and the updating file block pattern are respectively constituted by symbolic patterns representing the respective files, and arrow patterns added thereto. The arrow patterns of the source file block pattern and the disk block pattern indicate that data flow in the input direction. The arrow pattern of the updating file block pattern indicates that data flows in the output direction. The end block pattern is designed such that a character string "END" is inserted in a symbolic pattern representing the end of processing, and a main line to be connected to an upper block pattern is added to the symbolic pattern.

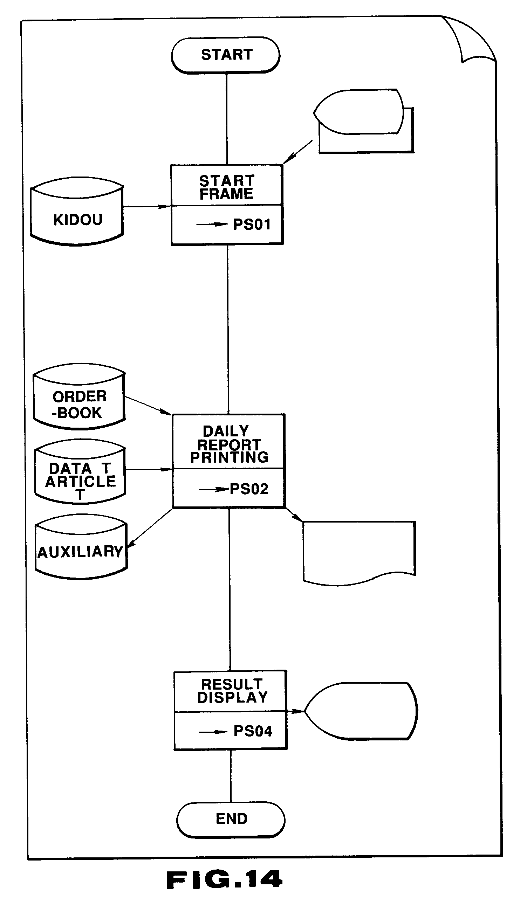

A flow chart forming device 13 forms a processing flow chart by using a work memory 14. In this case, the flow chart forming device 13 fetches and analyzes the contents of various programs prestored in the PS processing device 11, reads out graphic block patterns from the block pattern memory 12 in accordance with the analysis result, and sets the patterns in a development buffer 15. Note that the development buffer 15 is capable of storing, e.g., data corresponding to one A4-size sheet. The data in the development buffer 15 is supplied to the PS processing device 11 and is output from a printing unit in the PS processing 11. With this operation, a flow chart graphically representing a processing outline is formed, as shown in, e.g., Fig. 14.

Fig. 2 is a block diagram showing the arrangement of the PS processing device 11 (program execution means).

A CPU 21 controls the overall operation of the PS processing 11 in accordance with a system program prestored in a ROM 22 and an application program fetched in a system RAM 23. The following peripheral devices are connected to the CPU 21: an input unit 24, a display unit 25, a printing unit 26, and disk devices 27 and 28. The CPU 21 controls input/output operations of these components. In addition, a work RAM 29 and a PS processing unit 30 are connected to the CPU 21.

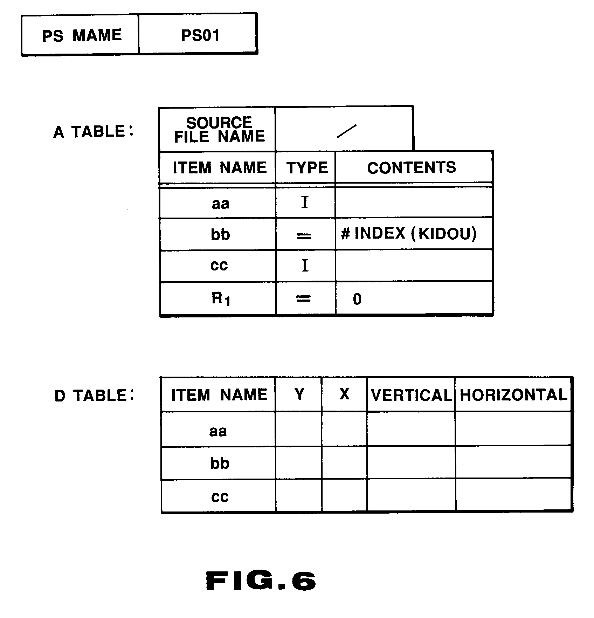

The disk device 27 stores a sequence definition file (RPS file) 27-1 and a processing definition file (PS file) 27-2. In the RPS file 27-1, the basic definitions of processing sequences and the like are arbitrarily preset in accordance with various units of processing. In the PS file 27-2, processing contents are defined as programs in various units of processing. Fig. 6 shows the storage contents of a sequence definition E01 as a detailed example of the RPS file 27-1, titles "start frame", "daily report printing", and "result display" and PS names "PS01", "PS02", and "PS04" are stored in correspondence with line numbers "1", "2", and "3". Note that the line numbers "1", "2", and "3" correspond to the order of processing.

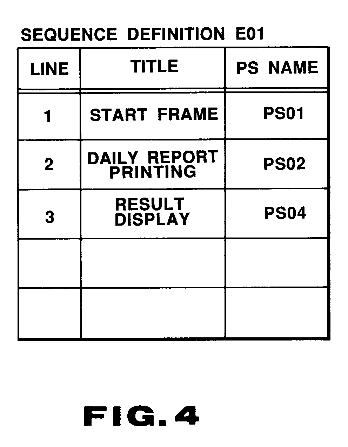

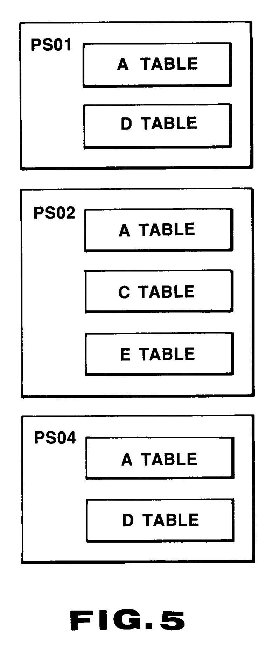

Fig. 5 shows a processing definition (processing program) corresponding to the sequence definition E01 in Fig. 4 as a detailed example of the PS file 27-2, in which "A table" and "D table" are stored as definition tables for defining a processing program corresponding to the PS name "PS01". In addition, "A table", "C table", and "E table" are stored as definition tables corresponding to the PS name "PS02". Furthermore, "A table" and "D table" are stored as definition tables corresponding to the PS name "PS04". In this case, "A table" is an individual processing program for defining data input processing; "C table", an individual program for defining file processing; "D table", an individual program for defining display processing; and "E table", an individual program for defining printing processing.

The PS processing unit 30 has the following arrangement. The PS processing 30 includes an RPS decoding section 30-1 and a PS decoding section 30-2. The RPS decoding section 30-1 reads a sequence definition from the RPS file 27-1, decodes it, and supplies the decoding result to the PS decoding section 30-2. Assume that the RPS decoding section 30-1 decodes the sequence definition E01 shown in Fig. 6. In this case, the RPS decoding section 30-1 supplies first the PS name "PS01" corresponding to the line number "1" to the PS decoding section 30-2. The PS decoding section 30-2 then reads a processing definition corresponding to the PS name "PS01" from the PS file 27-2, and decodes it. In this case, since the processing definition corresponding to the PS name "PS01" includes the A and D tables, the PS decoding section 30-2 decodes the A and D tables, and supplies them to a definition A decoding section 30-3 and a definition D decoding section 30-5. Subsequently, the RPS decoding section 30-1 supplies a processing definition corresponding to the execution PS name "PS02" from the PS file 27-2, decodes it, and supplies the A, C, and E tables to the definition A decoding section 30-3, a definition C decoding section 30-4, and a definition E decoding section 30-6, respectively.

The definition A decoding section 30-3, the definition C decoding section 30-4, the definition D decoding section 30-5, and the definition E decoding section 30-6 respectively decode the definition contents (processing program contents) stored in the A, C, D, and E tables in units of items, and respectively supply the decoding results to an input processing section 30-7, a file processing section 30-8, a display processing section 30-9, and a printing processing section 30-10. The input processing section 30-7 writes data, formed by referring to data input from the input unit 24 and a source file 28-1 and an index file 28-2 in the disk device 28, as input data in the work RAM 29. The file processing section 30-8 updates an updating file 28-3 in the disk device 28 on the basis of input data. The display processing section 30-9 processes data to be displayed/output from the display unit (e.g., a CRT display device) 25. The printing processing section 30-10 processes data to be printed out from the printing unit (e.g., a laser printer) 26.

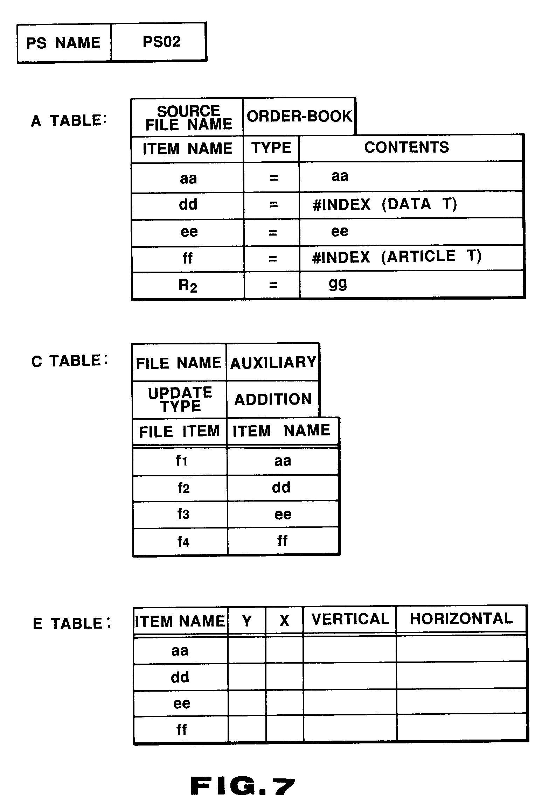

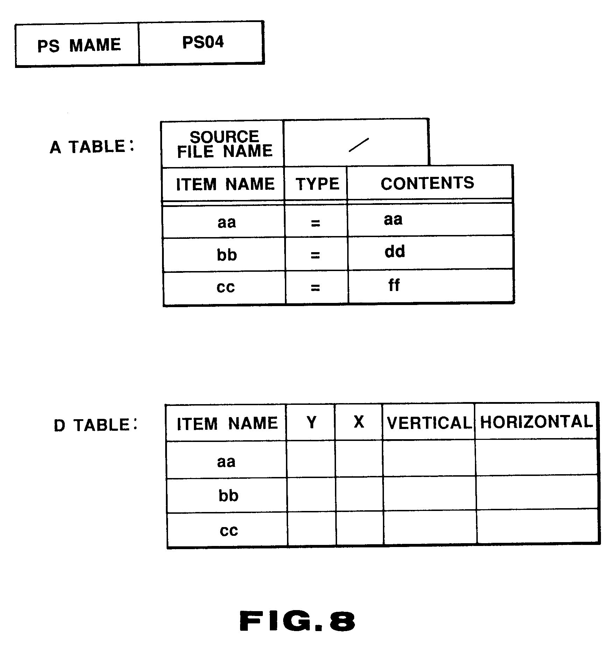

Figs. 6 through 8 show detailed definition contents (program contents) corresponding to the PS names "PS01", "PS02", and "PS04". Fig. 6 corresponds to the definition contents of "PS01 (start frame)"; Fig. 7, the definition contents of "PS02 (daily report printing)"; and Fig. 8, the definition contents of "PS04 (result display)".

Referring to Fig. 6, the A table for defining data input processing includes an area in which a source file name is defined as needed, and an area in which "TIPE" (data fetch types) and fetch contents are defined in correspondence with item names. In this case, the fetch types include "I", "=", and the like. The type "I" defines that data input from the input unit 24 should be fetched. The type "=" defines that data automatically formed by referring to the source file 28-1 and the index file 28-2 should be fetched. Note that the A table in Fig. 6 corresponds to "start frame". In the A table, the source file name of a source file from which data is fetched is not defined. In addition, the fetch type "=" and fetch contents "#index(KIDOU)" are set for an item name "bb". This defines that a start frame file in the index file 28-2 should be indexed to automatically form data. The type "=" and contents "0" are set for an item name "R1". This defines that "0" should be fetched as data corresponding to the item name "R1". The D table for defining data display processing defines a coordinate position (X,Y) indicating a data display start position corresponding to each item name, and the sizes of corresponding data in the vertical and horizontal directions from this coordinate position.

Since "order-book" is set in the A table in Fig. 7 as a source file name, data is fetched from a source file corresponding to the source file name "order-book" as needed. In the C table for defining file updating processing, "auxiliary" is set as the file name of a file to be updated at the start position, and "addition" is set as an update type representing update contents. In addition, item names associated with actual updating processing are set in correspondence with file names in the file to be updated (auxiliary file). The E table for defining data printing processing defines a coordinate position (X,Y) indicating the print start position of data corresponding to each item name, and the sizes of the data in the vertical and horizontal directions from the coordinate position.

Note that even in the case of "result display" in Fig. 8, the A table is required to fetch data to be displayed. In this case, however, since all the fetch types are "=", automatically formed data are data to be displayed, and the data are displayed/output at positions with sizes defined in the D table.

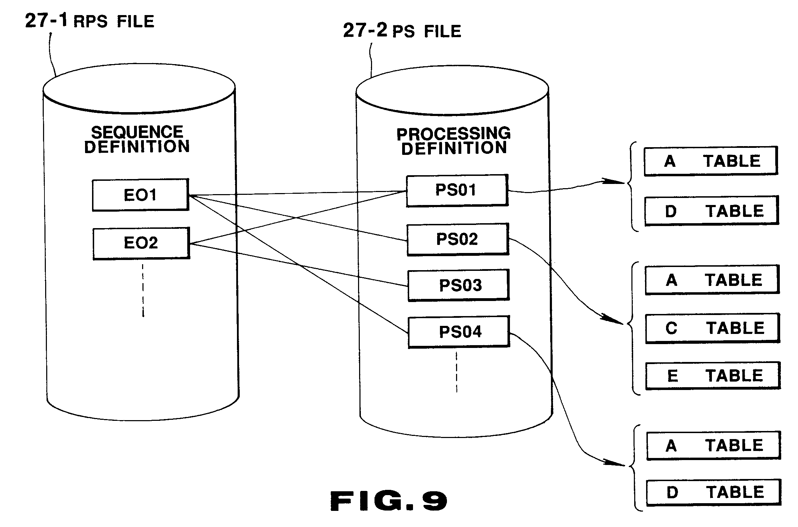

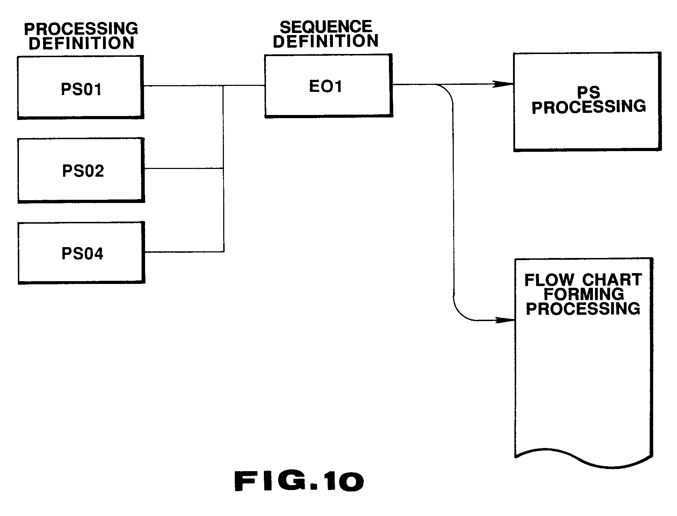

An operation of this embodiment will be described below with reference to Figs. 9 through 14. Assume that the sequence definition E01 having the contents shown in Fig. 4 is stored in the RPS file 27-1, and processing contents are stored in the PS file 27-2 in units of processing in accordance with the sequence definition E01. In this case, Fig. 9 shows a graphic representation of a state wherein the contents of the PS file 27-2 are accessed in accordance with the sequence definition E01. Fig. 10 shows a state wherein flow chart forming processing associated with the embodiment is executed on the basis of the definition contents in this case, in addition to normal PS processing (program execution processing).

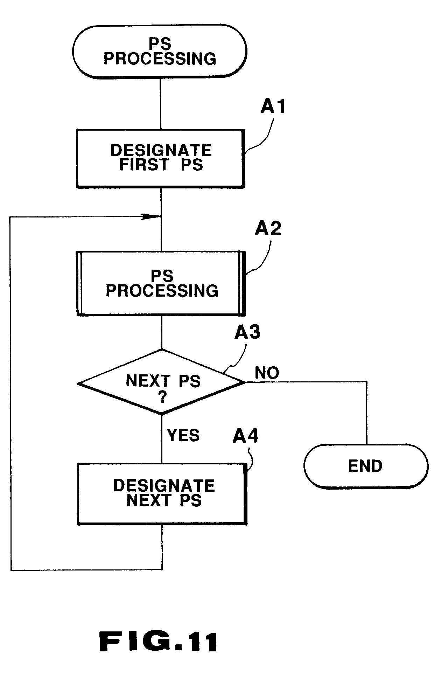

When data processing is started, PS processing is executed first in accordance with the flow chart shown in Fig. 11. Fig. 11 is a flow chart showing the main routine of PS processing. When the PS processing is started, the RPS decoding section 30-1 fetches the sequence definition EO1 from the RPS file 27-1, designates the PS name "PS01" corresponding to the line number "1", and supplies it to the PS decoding section 30-2 (step A1).

The flow then advances to the step of executing the processing (start frame) corresponding to the PS name "PS01" (step A2). In this case, the PS decoding section 30-2 decodes the definition tables (A and D tables) corresponding to this PS name. Consequently, the PS decoding section 30-2 supplies the A and D tables to the definition A decoding section 30-3 and the definition D decoding section 30-5, respectively. In this case, the definition contents of the A table are decoded by the definition A decoding section 30-3 in units of items. The input processing section 30-7 executes input processing for storing the corresponding data in the work RAM 29 in units of items in accordance with the definition contents of the A table. Subsequently, the definition contents of the D table are decoded by the definition decoding section 30-5. The display processing section 30-9 causes the display unit 25 to display/output the corresponding data in accordance with the definition contents of the D table.

When the processing corresponding to the PS name "PS01" is completed in this manner, the flow advances to step A3 to check by referring to the sequence definition E01 whether a PS name is stored at the next line number. In this case, since the execution PS name "PS02" is stored at the line number "2", the RPS decoding section 30-1 designates the execution PS name "PS02" corresponding to the line number "2" and supplies it to the PS decoding section 30-2 (step A4). The flow then returns to step A2 to perform the processing (daily report printing) corresponding to the execution PS name "PS02". In this case, the corresponding definition tables (A, C, and E tables) are read out from the PS file 27-2, and data fetch processing, file updating processing, and data printing processing are sequentially executed while the definition contents of the A, C, and E tables are decoded in the order named.

Subsequently, the flow advances to step A3. In this case, since the presence of the next PS name is also detected, the execution PS name "PS04" for the line number "3" is designated (step A4), and the flow advances to the step of executing the corresponding processing (result display). In this case, the corresponding definition tables (A and D tables) are referred to, and data fetch processing is performed in accordance with the definition contents, thus sequentially executing data display processing. Note that since the result display processing is set as the end processing by the sequence definition E01, the flow is ended upon completion of this processing.

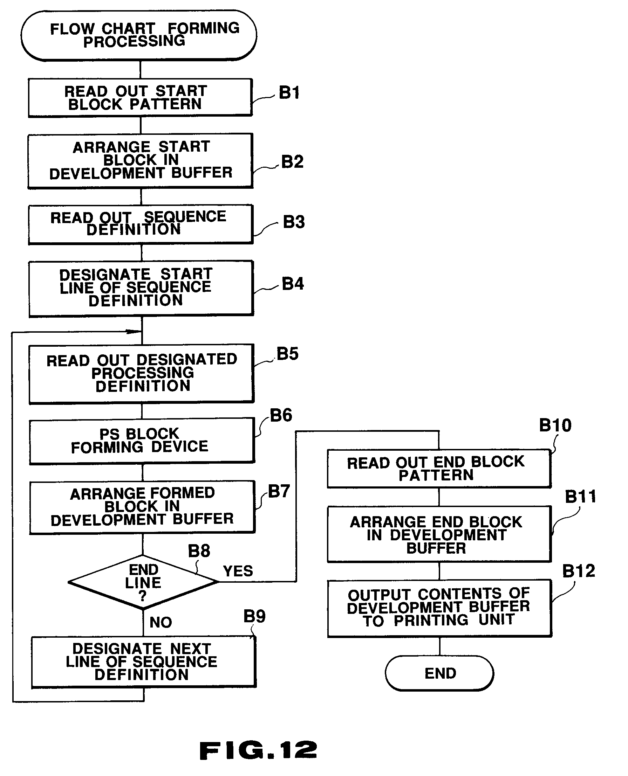

Flow chart forming processing will be described next. Fig. 12 is a flow chart showing the overall operations of this forming processing. The execution of the processing is started when a flow chart forming start command is supplied from the input unit 24.

The flow chart forming device 13 reads out the start block pattern (see Fig. 3) from the block pattern memory 12 (step B1). This start block pattern is arranged at a predetermined position relative to the development buffer 15 (step B2). A sequence definition read command is supplied to the PS processing device 11 (step B3). Upon reception of the sequence definition read out from the RPS file 27-1, the flow chart forming device 13 designates the start line of the definition (step B4). The device 11 then reads out the definition tables corresponding to the execution PS name of the designated line from the PS file 27-2 (step B5), and forms PS blocks in accordance with the storage contents of the definition tables.

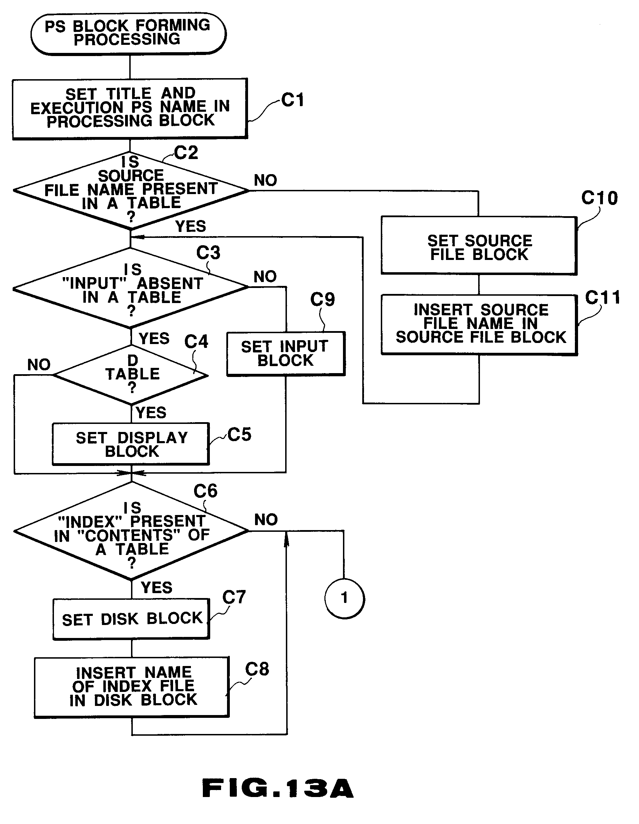

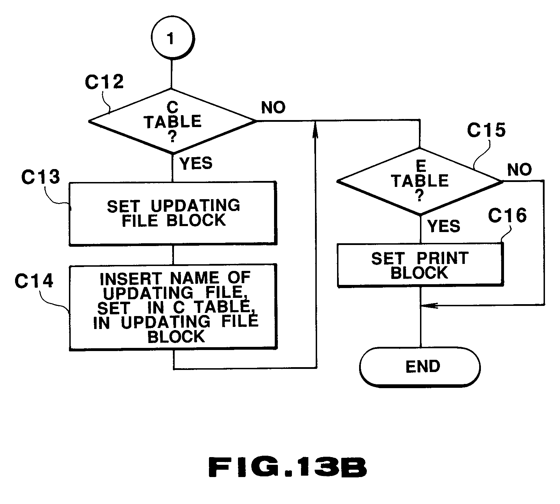

Figs. 13A and 13B are flow charts showing this PS block forming processing.

Assume that the start line of the sequence definition E01 is designated. In this case, the flow chart forming device 13 reads out the processing block pattern (see Fig. 13) from the block pattern memory 12 and sets it in the work memory 14. In addition, the unit 13 sets the title ("start frame") and the PS name ("PS01"), set in the start line of the sequence definition E01, in the processing block (step C1). As described above, the processing block pattern is designed such that the symbolic pattern having the elongated rectangular shape is located at the center of the block pattern, and the symbolic pattern is divided into the upper and lower portions. In this case, the character string "start frame" and the execution PS name "PS01" are respectively set in the upper and the lower portions.

In step C2, it is checked whether a source file name is set in the A table. In the start frame processing, since data fetch processing from a source file is not performed, no source file name is set in the A table. Consequently, the flow advances to step C3 to check whether the type "I" indicating data input processing is set in the A table. As shown in Fig. 6, since "I" is set in the A table, the input block pattern is read out from the block pattern memory 12 and is set in the work memory 14 (step C4). As described above, in this embodiment, the block patterns graphically representing the types of input/output devices are added to the right side of the symbolic pattern in the processing block pattern in accordance with the type of an input/output device to be used. In this case, the input block pattern is set at the predetermined fixed position, i.e., the upper right position of the symbolic pattern representing processing.

In the next step, it is checked whether "CONTENTS" of the A table includes "index" (step C6). Since the A table in Fig. 6 includes "#index-(KIDOU)", the disk pattern is read out from the block pattern memory 12 and is set in the work memory 14 (step C7). As described above, in this embodiment, the file block patterns corresponding to the types of files are added to the left side of the symbolic pattern in the processing block pattern. In this case, the disk block is set on the central right side of the symbolic pattern representing processing. The name "KIDOU" of the index file is read out and inserted in the disk block (step C8).

The flow further advances to step C12. If the start line of the sequence definition E01 is designated, the definition tables corresponding to the execution PS name "PS01" do not include the C and E tables.

Therefore, NO is obtained in both steps C12 and C15, and the flow is ended. Although the definition tables corresponding to the execution PS name "PS01" include the A and D tables, when the input block is set, the display block is not set even if the D table is present.

When the PS block forming processing corresponding to the start line of the sequence definition E01 is completed in this manner, the flow advances to step B7 in Fig. 12 to set the formed block in the development buffer 15. In this case, the formed block is arranged below the start block such that the main line of the start block already set in the development buffer 15 is connected to the main line of the currently formed block pattern. Subsequently, each formed block is set in the development buffer 15 such that its main line is connected to the main line of a corresponding upper block. Now assume that the input block and the disk block are respectively arranged, as the formed blocks, on the upper right and central left sides of the symbolic pattern representing processing.

Subsequently, the above-described PS block forming processing is repeated up to the end line of the sequence definition E01. More specifically, if it is detected in step B8 that the current line is not the end line, the flow advances to step B9. After the next line of the sequence definition is designated, the flow returns to step B5. As a result, the second line of the sequence definition E01 is designated, and PS block forming processing is performed in accordance with the set contents of the definition tables (A, C, and E tables) corresponding to the execution PS name "PS02" for the second line.

In step C1, the title ("daily report printing") and the execution PS name "PS02" are set in the processing block. The flow then advances to step C2. In this case, since a source file name is set in the A table, as shown in Fig. 7, the source file block pattern is read out from the block pattern memory 12 and is set in the work memory 14 (step C10). The source file block is set on the upper left side of the symbolic pattern representing processing. In step C11, the source file name ("order-book") is inserted in the source file block. Thereafter, the flow returns to step C3. Since "I" representing input processing is not present in "TIPE" of the A table, the flow advances to step C4 to check the presence/absence of the D table. In this case, since the absence of the D table is detected in step C4, and the presence of "index" in "CONTENT" of the A table is detected in step C6, setting processing of the disk block pattern is performed (step C7). In the next step, insertion processing of an index file name is performed (step C8). In this case, two file names "date T" and "article T" (T: table) are inserted in the disk block.

The flow then advances to step C12. Since the presence of the C table is detected, the updating file block pattern is read out from the block pattern memory 12 and is set in the work memory 14. In this case, this block pattern is arranged on the lower left side of the symbolic pattern representing processing (step C13). The name ("auxiliary") of the updating file in the C table is inserted in the updating file block (step C14). Since the presence of the E table is detected in step C15, the print block pattern is read out from the block pattern memory 12 and is set in the work memory 14. In this case, the block pattern is arranged on the lower right side of the symbolic pattern representing processing (step C16).

When the PS block forming processing corresponding to the second line of the sequence definition E01 is completed in this manner, the flow advances to step B7 to set the formed blocks in the development buffer 15. The formed blocks are arranged at the respective positions as follows: the print block is on the lower right side of the symbolic pattern representing processing; the source file block (file name "order-book"), the upper left side of the symbolic pattern; the disk block (file names "data T, article T"), the central left side of the symbolic pattern; and the updating file block (file name "auxiliary"), the lower left side of the symbolic pattern.

When the third line of the sequence definition E01 is designated afterward, PS block forming processing is performed in accordance with the definition tables (A and D tables) corresponding to the execution PS name "PS04". The title ("result display") and the execution PS name "PS04" are set in the processing block first (step C1). Since "TIPE" of the A table does not include the type "I" representing input processing, and the D table is present, the print block pattern is read out from the block pattern memory 12 and is arranged on the central right side of the symbolic pattern representing processing (step C15). In this case, since "index" is not set in "CONTENTS" of the A table, and neither the C table nor the E table are present, the PS block forming processing is ended at this time, and the formed block is set in the development buffer 15 (step B7).

The flow then advances to step B8. Since the end line of the sequence definition E01 is designated, the flow advances to step B10 to read out the end block pattern from the block pattern. The block pattern is arranged at a predetermined position in the development buffer 15 (step B11). The contents of the development buffer 15 are transferred to the printing unit 26 of the PS processing device 11 to be printed out (step B12). With this operation, a flow chart graphically representing the processing outline is formed, as shown in Fig. 14.

As shown in Fig. 14, processing blocks are formed in units of processing. In addition, graphic blocks representing external devices such as a disk device, an input device, and an output device are added to the respective processing blocks, and arrow patterns indicating the flows of data are inserted between the processing blocks and the graphic blocks representing the external devices, thereby graphically representing not only the overall processing outline but also the processing contents in units of processing. With this operation, in the case of "daily report printing" shown in Fig. 14, for example, it is easily understood that the contents of an updating file (auxiliary file) are updated on the basis of data fetched from a source file (order-book file) and data retrieved from an index file (date and article tables), and the updated contents are printed out as daily report data. In this case, since the source file, the disk file, and the updating file are arranged at the predetermined fixed positions, the type of each file can be identified according to its position.

In the above-described embodiment, a maximum of six graphic patterns representing external devices can be set around a graphic pattern representing a unit of processing. However, the types of external devices and their layout can be arbitrarily set, but are not limited to those in the above embodiment.

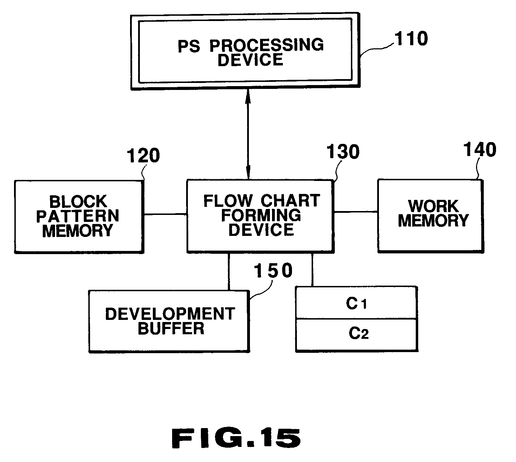

The second embodiment of the present invention will be described next with reference to Figs. 15 through 23B.

Fig. 15 is a block diagram showing the arrangement of a main part of a data processing apparatus.

Since a PS processing device 110 is identical to the PS processing device 11 in the first embodiment, a description thereof will be omitted.

A block pattern memory 120 serves to store various types of graphic block patterns used to draw a processing flow chart. More specifically, the graphic block patterns stored in the block pattern memory 120 are: two types of start blocks ST1 and ST2, an end block, three types of decision blocks JD1, JD2, and JD3, a processing block, and the like.

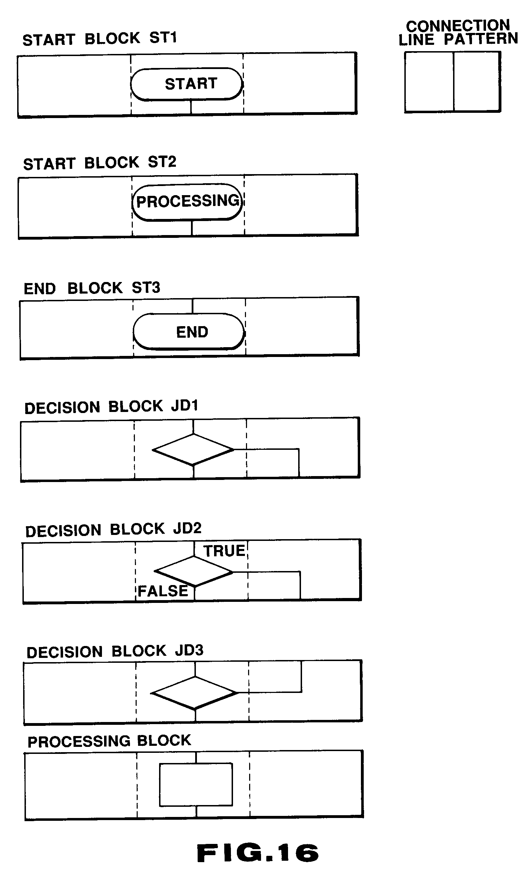

Fig. 16 shows the respective types of graphic block patterns stored in the block pattern memory 120. Each of the start blocks ST1 and ST2 is constituted by a symbolic pattern representing the start of processing, and a connection line to be connected to a lower block pattern. The start block ST1 is designed such that a character string "START" is inserted in the symbolic pattern. The start block ST2 is designed such that a character string "PROCESSING ( )" is inserted in the symbolic pattern. The end block is designed such that a character string "END" is inserted in a symbolic pattern representing the end of processing, and a connection pattern to be connected to an upper block is added to the symbolic pattern. Each of the decision blocks JD1, JD2, and JD3 is constituted by a rhomboic symbolic pattern representing decision processing, connection lines added to the upper and lower portion of the symbolic pattern, and a connection line branching off to the right of the symbolic pattern. The decision block JD1 is a generally used graphic block representing a conditional branch associated with an IF statement, and the lower and right connection lines respectively correspond to "true" and "false", which respectively indicate that the condition is true and is not true. The decision block JD2 is equivalent to the decision block JD1 except that "true" and "false" are reversed, and hence the lower and right connection lines respectively correspond to "false" and "true". That is, the decision block JD2 is a reverse block in which the directions of a conditional branch based on an IF statement are reversed. In order to clarify such a reversed state, characters "true" and "false" are inserted in the decision block JD2. The decision block JD3 is a graphic block representing a conditional branch associated with a loop statement. The processing block is arranged on the main line and is constituted by a symbolic pattern having an elongated rectangular shape and divided into two portions, i.e., upper and lower block patterns, and connection lines respectively connected to the upper and lower block patterns. Note that a connection line pattern is used to connect the connection lines of upper and lower blocks to each other, and serves as a subline connection pattern.

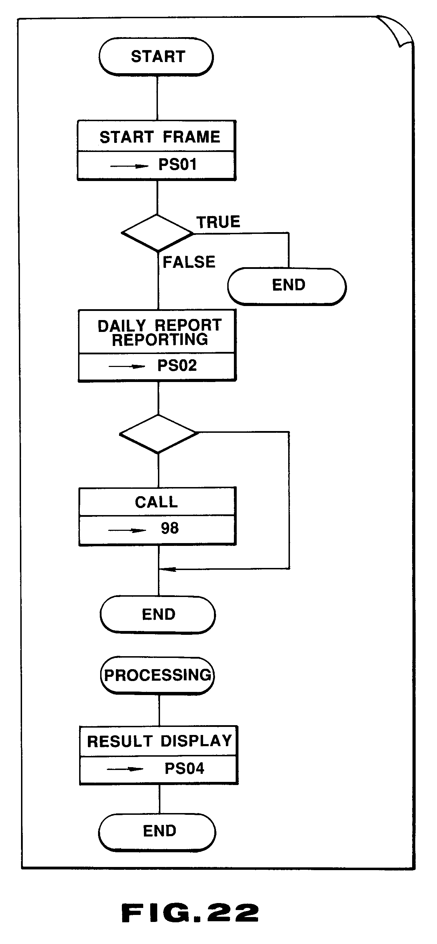

A flow chart forming device 130 serves to form a processing flow chart by using a work memory 140 and condition registers C1 and C2. In this case, preset various definition contents are fetched in the PS processing device 110 to be analyzed. In accordance with the analysis result, the flow chart forming device 130 reads out corresponding graphic block patterns from the block pattern memory 120 and set them in a development buffer 150. Note that the development buffer 150 is capable of storing, e.g., data corresponding to one A4-size sheet. The data in the development buffer 150 is supplied to the PS processing device 110 and is output from a printing unit in the PS processing 110. With this operation, a flow chart graphically representing a processing outline is formed, as shown in, e.g., Fig. 22.

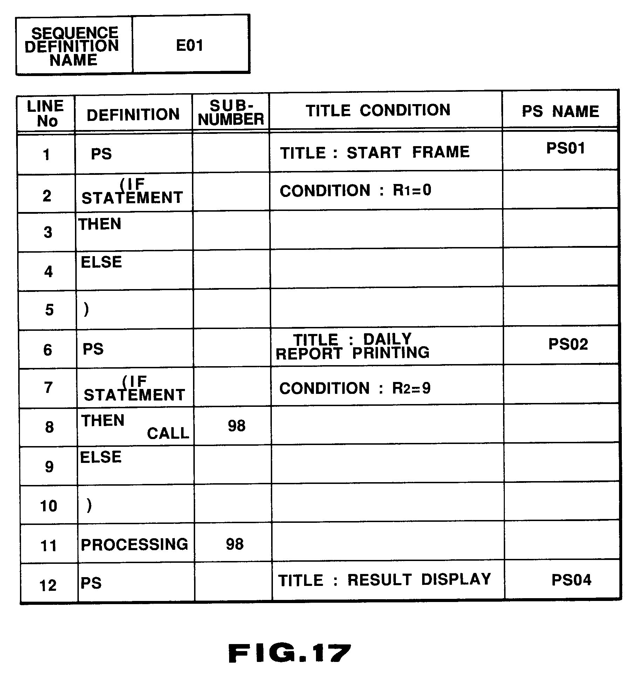

Fig. 17 shows the set contents of a sequence definition E01 as a detailed example of an RPS file 27-1, in which "DEFINITION", "SUB-NUMBER", "TITLEzCONDITION", and "EXECUTION PS NAME" are arbitrarily set in correspondence with line Nos. "1", "2", "3",.... In this case, the description corresponding to the line No."1" indicates the execution of PS processing ("title: start frame") indicated by an execution PS name "PS01". The line Nos. "2" through "5" correspond to the description of an IF statement. More specifically, the start of the IF statement is described in "DEFINITION" corresponding to the line No."2", and the end of the IF statement is described in "DEFINITION" corresponding to the line No. "5". With this IF statement, it is checked whether condition "R1 = 0" is satisfied. As a result, the flow branches to "then (true)" or "else (false)". In this case, it is defined that if "then" is satisfied, the processing is ended at this point of time. The description corresponding to the line No. "6" indicates the execution of PS processing ("title: daily report printing") designated by an execution PS name "PS02". The line Nos. "7" through "10" also correspond to an IF statement. In this IF statement, the following processing is defined. It is checked whether condition "R2 = 99" is satisfied. If "then" is obtained, a subroutine (sub-number "98") is called. The description corresponding to the line No. "11" indicates the execution start of the processing designated by the subnumber "98". The corresponding processing contents are described in the line No. "12", which are PS processing ("title: result display") designated by an execution PS name "PS04". In this embodiment, the processing flow chart shown in Fig. 22 is formed in accordance with the set contents of this sequence definition E01.

Since the PS file 27-1 has the same processing definition as that of the PS file 27-2 shown in Fig. 5 in the first embodiment, a description thereof will be omitted.

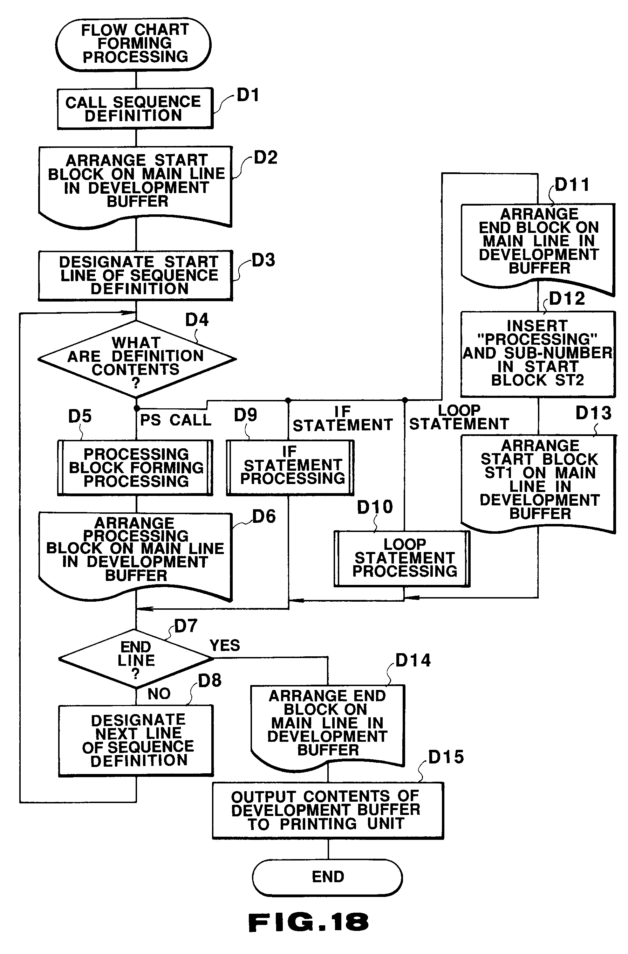

An operation of this embodiment will be described below with reference to Figs. 18 through 23B.

Fig. 18 shows flow chart forming processing. When a flow chart forming command is supplied from an input unit 24, the execution of the operation based on the flow chart shown in Fig. 18 is started.

The flow chart forming device 130 calls a sequence definition from the PS file 27-1 of the PS processing device 110 and sets it in the work memory 140 (step D1). The unit 130 then reads out the start block ST1 (see Fig. 16) from the block pattern memory 120 and arranges it on a main line in the development buffer 150 (step D2). In this case, the main line in the development buffer 150 indicates a virtual region corresponding to the main line (main flow) of a processing flow chart.

The start line of the sequence definition set in the work memory 140 is designated (step D3), and its definition contents are discriminated (step D4).

Assume that the sequence definition E01 shown in Fig. 17 is called. In this case, since the definition contents of the start line are "PS", the flow advances to step DS to perform processing block forming processing.

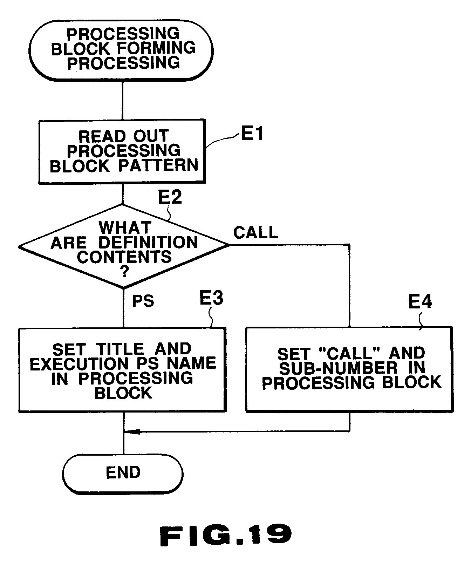

Fig. 19 is a flow chart showing the processing block forming processing. The processing block pattern is read out from the block pattern memory 120 (step E1). It is then checked whether the definition contents of the designated line (start line) of the sequence definition are "PS" or "call" (step E2). In this case, since the definition contents are "PS", a title ("start frame") and an execution PS name ("PS01") are read out from the designated line of the sequence definition, and the title and the execution PS name are respectively set in the upper and lower portions of the graphic pattern constituting the processing block pattern (step E3).

When the processing block forming processing is completed in this manner, the flow advances to step D6 in Fig. 18 to arrange the processing block on the main line in the development buffer 150. Thereafter, it is checked whether the current line is the end line of the sequence definition (step D7). In this case, since the start line is designated, the flow advances to step D8 to designate the next line of the sequence definition. The flow then returns to step D4 to check the definition contents of the second line. In this case, since the IF statement is present, the flow jumps to the step of IF statement processing (step D9).

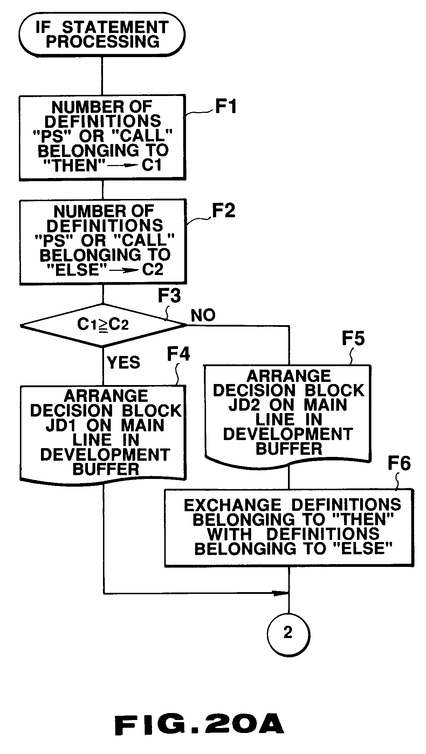

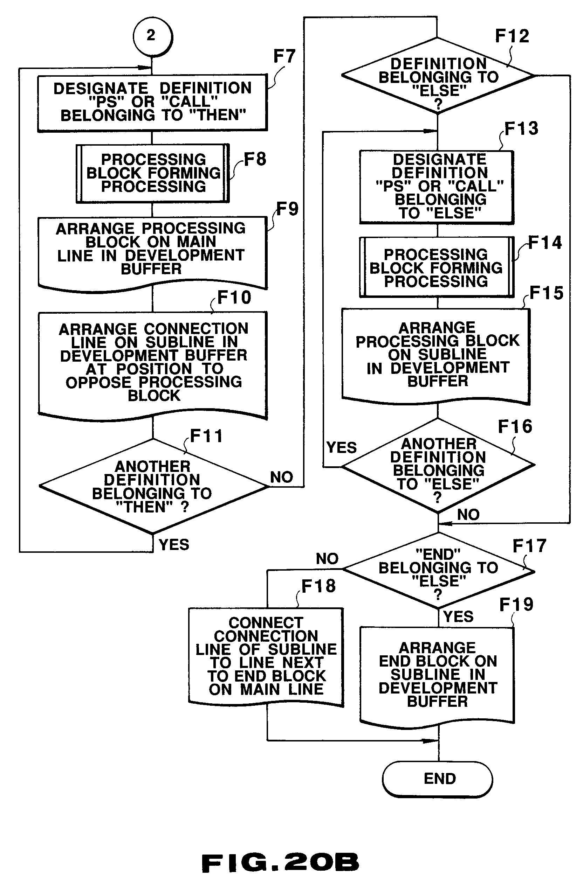

Fig. 20 is a flow chart showing this IF statement processing. The number of definitions "PS" or "call" following the "then" is obtained by referring to the sequence definition E01, and is set in the condition register C1 (step F1). That is, when a processing flow chart is to be formed in accordance with the contents of the sequence definition E01, the number of graphic patterns following the "true" of the IF statement is obtained and set in the condition register C1. Subsequently, the number of PS or call definitions following the "else" is obtained by referring to the sequence definition E01, and is set in the condition register C2 (step F2). As a result, the number of graphic patterns following the "false" of the IF statement is set in the condition register C2. Subsequently, the value (the number of graphic patterns following "true") of the condition register C1 is compared with the value (the number of graphic patterns following "false") of the condition register C2.

Since "0" and "1" are respectively set in the condition registers C1 and C2, C1 < C2 is detected in step F3. The flow then advances to step F5 to read out the decision block JD2 from the block pattern memory 120 and set it on the main line in the development buffer 150. Note that, as shown in Fig. 16, in the decision block JD2, "true" and "false" of the general decision block JD1 are reversed, and the characters "true" and "false" are inserted in the graphic pattern representing a conditional branch in the decision block JD2. The flow advances to step F6 to exchange the definitions belonging to "then" and these belonging to "else" are exchanged with each other in the sequence definition E01 set in the work memory 140. In this case, the exchange of the definitions is not a logical exchange between the "true" and "false", but an exchange between the definitions belonging to "then" and those belonging to "else".

The flow advances to step F7 to designate "PS" or "call" as a definition belonging to "then". A processing block corresponding to the corresponding designated line is formed (step F8). The processing block forming processing in this case is also executed in accordance with the flow chart in Fig. 19. The processing block formed in this manner is arranged on the main line in the development buffer 150 (step F9). Since the line No. "6" of the sequence definition E01 includes the definition belonging to "else", the corresponding processing block should not be arranged on the main line in the development buffer 150. In this case, however, since the definitions belonging to "else" are exchanged with those belonging to "then" by the exchange processing in step F6, the processing block corresponding to the line No. "6" is arranged on the main line in the development buffer 150.

Thereafter, the connection line pattern shown in Fig. 16 is arranged on a subline in the development buffer 150 at a position to oppose the processing block (step F10). Note that the subline in the development buffer 150 indicates a subline (branch flow) of the processing flow chart, i.e., a virtual region corresponding to a flow branching from the main line to the right through an IF statement or a loop statement. It is then checked whether another definition belonging to "then" is present (step F11). If there is another definition, the flow returns to step F7 to repeat the above-described operation.

When the processing for "then" is completed in this manner, it is checked whether there are definitions belonging to "else" (step F12). Although the line No. "6" of the sequence definition E01 originally includes a definition belonging to "else", since this definition is exchanged with the definition belonging to "then" in step F6 described above, the absence of a definition is detected in step F12. In this case, the flow advances to step F17. In this case, since "end" belongs to "else", the end block is read out from the block pattern memory 120 and is arranged on a subline in the development buffer 150 (step F19). Note that if "end" does not belong to "else", the connection line of a subline is connected to a line next to the end block on the main line in the development buffer 150 (step F18).

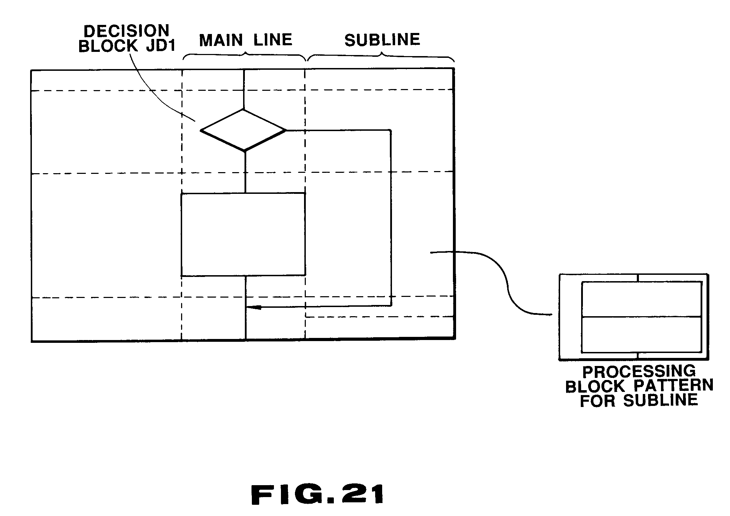

Fig. 21 shows a case wherein the decision block JD1 and the processing block are sequentially arranged on the main line in the development buffer 150, but no graphic pattern is arranged on the subline. In this case, the connection line pattern is arranged on the subline at a position to oppose the processing block, and this connection line pattern is connected to a line next to the end block on the main line.

If there is a definition belonging to "else", "PS" or "call" is designated as a definition (step F13), and the processing block forming processing is performed in accordance with the flow chart shown in Fig. 19 (step F14). The processing block thus formed is arranged on the subline in the development buffer 150 (step F15). If there is another definition belonging to "else" (step F16), the definition is designated (step F13), and the above-described processing block forming/arranging processing is repeated. In this case, the processing block arranged on the subline in the development buffer 150 is a processing block pattern for a subline such as the one shown in Fig. 21. When this block is arranged on the subline, the already arranged connection line pattern is replaced with the processing block (see Fig. 21).

When the IF statement processing is completed, the flow advances to step D7 in Fig. 18. If the end line is not detected , the next line of the sequence definition E01 is designated (step D8).

Since the next lien corresponds to an IF statement, the IF statement processing in step D9 is performed. In this case, the number of PS or call definitions belonging to "then" is "1", and the number of definitions "PS" and "call" belonging to "else" is "0". Since C1 r C2 is detected in step F3, the flow advances to step F4 to read out the decision block JD1 from the block pattern memory 120 and arrange it on the main line in the development buffer 150. Note that the decision block JD1 represents a normal conditional branch, i.e., the lower and right connection lines of the block respectively correspond to "true" and "false", and hence the characters "true" and "false" are not included in this decision block. That is, the absence of "true" and "false" indicates that the processing is performed in accordance with a normal conditional branch.

The flow then advances to step F7 in Fig. 20. In this case, since a call definition belonging to "then" is designated, the flow advances to step E4 in Fig. 19 in processing block forming processing. In step E4, "call" and a sub-number "98" are set in a processing block. The processing block thus formed is arranged on the main line in the development buffer 150 (step F9). Subsequently, the flow advances to the processing for "else". In this case, since there are neither definition nor "end" belonging to "else", only the processing for connecting the connection line of a subline to the main line is performed (step F18).

Subsequently, the line No. "11" of the sequence definition E01 is designated. Since "processing" is set in this line, the flow advances to step D11 in Fig. 18 to arrange the end block read out from the block pattern memory 120 on the main line in the development buffer 150. In the next step, "processing" and the sub-number "98" are inserted in the start block ST2 read out from the block pattern memory 120 (step D12). In addition, this start block ST2 is arranged on the main line in the development buffer 150 (step D13).

The line No. "12" of the sequence definition E01 is designated. Since the corresponding definition is "PS", the end block is formed, a title and an execution PS name are set in the block, and the resultant block is arranged on the main line in the development buffer 150 (steps D5 and D6). Thereafter, since the end line is detected in step D7, the flow advances to step D14 to arrange the end block read out from the block pattern memory 120 on the main line in the development buffer 150. The resultant block is then output from a printing unit 26 in the PS processing device 110 (step D15).

Fig. 22 shows a processing flow chart formed and output in accordance with the sequence definition E01 shown in Fig. 17. It is apparent from this flow chart that the decision block following the processing block of "start frame" is a reverse block obtained by reversing a normal decision block, and the decision block following the processing block of "daily report printing" is a normal decision block. In addition, it is understood that processing indicated by the sub-number "98" is called after "daily report printing", and the called processing is "result display".

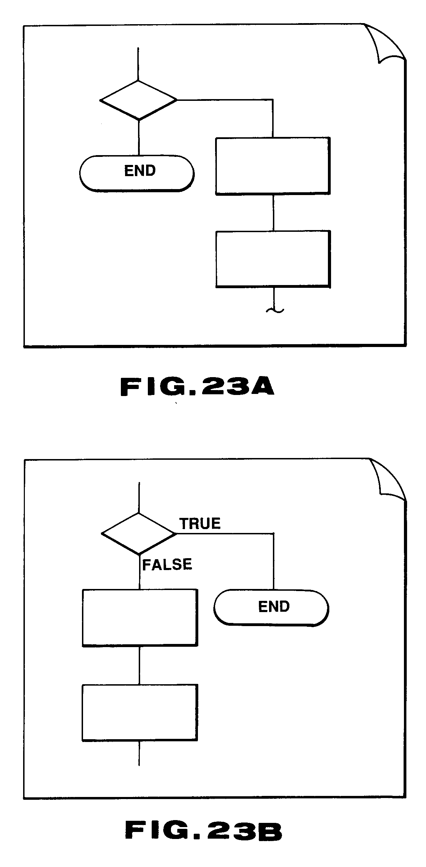

As has been described above, according to this processing, a processing flow such as the one shown in Fig. 22 is automatically formed by analyzing a sequence definition list. In a case wherein a processing flow chart includes a decision block representing a conditional branch, if the lower and right connection lines of the decision block are respectively fixed to "true" and "false", and the number of graphic patterns following the "false" is larger than that of graphic patterns following the "true", a processing flow chart such as the one shown in Fig. 23A is formed and output. In contrast to this, in this embodiment, the positions of "true" and "false" are automatically changed to reverse the positions of graphic patterns following the "true" and "false", as shown in Fig. 23B. As a result, the length of the main line of the processing flow chart is elongated, while the length of the sub-line is shortened, thus obtaining a well-proportioned, easy-to-see flow chart.

**Claims**

1.  A data processing apparatus for processing data in accordance with a predetermined program, comprising:

    (a) processing sequence storage means (27-1) for storing names of various units of processing, and a sequence of processing the respective units of processing;

    (b) processing program storage means (27-2) for storing predetermined processing programs in correspondence with the respective units of processing;

    (c) program execution means (30) for, in response to a start of data processing, sequentially reading out the processing programs, stored in said processing program storage means in correspondence with the respective units of processing stored in said processing sequence means, in accordance with the sequence stored in said processing sequence storage means, decoding the read processing programs, and executing data processing in accordance with the programs;

    (d) block pattern storage means (12) for storing one basic block pattern common to the respective units of processing;

    (e) forming means (13) for, in response to a start of flow chart formation, forming processing block patterns by adding the names of the units of processing to the basic block pattern in the respective units of processing stored in said processing sequence storage means; and

    (f) output means (13, 15, 26) for sequentially connecting the processing block patterns, formed in accordance with the respective units of processing stored in said processing sequence storage means, in accordance with the sequence stored in said processing sequence storage means, and outputting the resultant block patterns on a recording paper sheet.

2.  A data processing apparatus for processing data in accordance with a predetermined program, comprising:

    (a) processing sequence storage means (27-1) for storing names of various units of processing, and a sequence of processing the respective units of processing;

    (b) processing program storage means (27-2) for storing predetermined processing programs in correspondence with the respective units of processing;

    (c) processing execution means (30) for, in response to a start of data processing, sequentially reading out the processing programs, stored in said processing program storage means in correspondence with the respective units of processing stored in said processing sequence means, in accordance with the sequence stored in said processing sequence storage means, decoding the read processing programs, and executing data processing in accordance with the programs;

    (d) discrimination means (30-3, 30-4, 30-5, 30-6) for, in response to a start of flow chart formation, discriminating types of the processing programs, stored in said processing program storage means in correspondence with the respective units of processing, in the respective units of processing stored in said processing sequence storage;

    (e) forming means (13) for forming processing block patterns corresponding to the processing programs discriminated by said discrimination means; and

    (f) output means (13, 15, 26) for sequentially connecting the processing block patterns, formed in accordance with the respective units of processing stored in said processing sequence storage means, in accordance with the sequence stored in said processing sequence storage means, and outputting the resultant block patterns on a recording paper sheet.

3.  A data processing apparatus for processing data in accordance with a predetermined program, comprising:

(a) processing sequence storage means (27-1) for storing names of various units of processing, and a sequence of processing the respective units of processing;

(b) individual processing program storage means (27-2) for storing at least one of individual programs for input processing, display processing, printing processing, and file processing in correspondence with each unit of processing;

(c) processing execution means (30-7, 30-8, 30-9, 30-10) for reading out each of the individual programs, stored in said individual processing program storage means, in correspondence with one unit of processing, decoding the read individual program, and executing individual data processing;

(d) repetition means (30) for, in response to a start of data processing, sequentially designating the respective units of processing stored in said processing sequence storage means in accordance with the stored sequence, and causing said processing execution means to repeat read processing and execution in the respective units of processing;

(e) block pattern storage means (12) for storing one basic block pattern common to the respective units of processing, and input/output block patterns corresponding to types of the individual programs for the input processing, the display processing, the printing processing, and the file processing;

(f) discrimination means (30-3, 30-4, 30-5, 30-6) for, in response to a start of flow chart formation, discriminating types of the processing programs, stored in said processing program storage means in correspondence with the respective units of processing, in the respective units of processing stored in said processing sequence storage;

(g) forming means (13), connected to said block pattern storage means, for forming composite graphic patterns by combining the basic block pattern and input/output block patterns corresponding to the types of the individual programs, discriminated by said discrimination means, in the respective units of processing stored in said processing sequence storage means; and

(h) output means (13, 15, 26) for sequentially connecting the composite graphic patterns, formed by said forming means in the respective units of processing, in accordance with the sequence stored by said processing sequence storage means, and outputting the resultant graphic patterns on a recording paper sheet.

4.  An apparatus according to claim 3, characterized in that said forming means includes means (13, step B7) for combining the input/output block patterns at predetermined positions relative to an output position of the basic block pattern in units of types of processing programs.

5.  A flow chart forming apparatus comprising:

flow chart forming means (130) for forming a processing flow chart by sequentially combining a plurality of graphic blocks in accordance with a processing sequence;

comparison means (130, step F3) for, when a graphic pattern representing a conditional branch is included in a processing flow chart formed by said flow chart forming means, comparing the numbers of graphic blocks following the respective conditions of the graphic block representing the conditional branch (130, steps F4, F5, and F6); and

output position changing means for changing output positions of graphic blocks following the respective conditions of the graphic block representing the conditional branch in accordance with the comparison result obtained by said comparison means.

PS PROCESSING
DEVICE

11

12

13

14

BLOCK
PATTERN
MEMORY

FLOW CHART
FORMING
DEVICE

WORK
MEMORY

DEVELOPMENT
BUFFER

15

# FIG.1

**21**

CPU

**27**

**27-1** **27-2**

RPS FILE

PS FILE

**22** ROM

**23** RAM

**24** INPUT UNIT

**29** RAM (FOR PS)

**25** DISPLAY UNIT

**26** PRINTING UNIT

**30**

**30-1** RPS DECODING SECTION

**30-2** PS DECODING SECTION

**30-7** INPUT PROCESSING SECTION

**30-3** DEFINITION A DECODING SECTION

**30-8** FILE PROCESSING SECTION

**30-4** DEFINITION C DECODING SECTION

**30-9** DISPLAY PROCESSING SECTION

**30-5** DEFINITION D DECODING SECTION

**30-10** PRINTING PROCESSING SECTION

**30-6** DEFINITION E DECODING SECTION

PS PROCESSING UNIT

**28**

**28-1** SOURCE FILE GROUP

**28-2** INDEX FILE GROUP

**28-3** UPDATING FILE GROUP

# FIG.2

FIG.3

EP 0 510 514 A1

SEQUENCE DEFINITION E01

| LINE | TITLE | PS NAME |
|------|-------|---------|
| 1 | START FRAME | PS01 |
| 2 | DAILY REPORT PRINTING | PS02 |
| 3 | RESULT DISPLAY | PS04 |
| | | |
| | | |

# FIG. 4

**PS01**

A  TABLE

D TABLE

**PS02**

A TABLE

C TABLE

E TABLE

**PS04**

A TABLE

D TABLE

# FIG.5

EP 0 510 514 A1

| PS MAME | PS01 |
|---|---|

A TABLE:

| SOURCE FILE NAME | | / |
|---|---|---|
| ITEM NAME | TYPE | CONTENTS |
| aa | I | |
| bb | = | # INDEX (KIDOU) |
| cc | I | |
| $R_1$ | = | 0 |

D TABLE:

| ITEM NAME | Y | X | VERTICAL | HORIZONTAL |
|---|---|---|---|---|
| aa | | | | |
| bb | | | | |
| cc | | | | |

# FIG.6

18

| PS NAME | PS02 |
|---------|------|

A TABLE :

| SOURCE FILE NAME | ORDER-BOOK | |
|---------|------|------|
| ITEM NAME | TYPE | CONTENTS |
| aa | = | aa |
| dd | = | #INDEX (DATA T) |
| ee | = | ee |
| ff | = | #INDEX (ARTICLE T) |
| $R_2$ | = | gg |

C TABLE :

| FILE NAME | AUXILIARY |
|-----------|-----------|
| UPDATE TYPE | ADDITION |
| FILE ITEM | ITEM NAME |
| f1 | aa |
| f2 | dd |
| f3 | ee |
| f4 | ff |

E TABLE :

| ITEM NAME | Y | X | VERTICAL | HORIZONTAL |
|-----------|---|---|----------|------------|
| aa | | | | |
| dd | | | | |
| ee | | | | |
| ff | | | | |

# FIG.7

| PS MAME | PS04 |
|---------|------|

A TABLE :

| SOURCE FILE NAME | / | | |
|------------------|------|------|----------|
| ITEM NAME | TYPE | CONTENTS | |
| aa | = | aa | |
| bb | = | dd | |
| cc | = | ff | |

D TABLE :

| ITEM NAME | Y | X | VERTICAL | HORIZONTAL |
|-----------|---|---|----------|------------|
| aa | | | | |
| bb | | | | |
| cc | | | | |

# FIG.8

20

EP 0 510 514 A1

**27-1** RPS FILE

**27-2** PS FILE

SEQUENCE
DEFINITION

PROCESSING
DEFINITION

| EO1 |
| EO2 |

| PS01 |
| PS02 |
| PS03 |
| PS04 |

| A | TABLE |
| D | TABLE |

| A | TABLE |
| C | TABLE |
| E | TABLE |

| A | TABLE |
| D | TABLE |

# FIG. 9

FIG.10

**FIG.11**

```
       ╭─────────────────────────╮
       │  FLOW CHART  FORMING    │
       │      PROCESSING          │
       ╰─────────────────────────╯
                    │
       ┌─────────────────────────┐
       │   READ OUT START        │──── B1
       │   BLOCK PATTERN         │
       └─────────────────────────┘
                    │
       ┌─────────────────────────┐
       │   ARRANGE START         │
       │   BLOCK IN              │──── B2
       │   DEVELOPMENT BUFFER    │
       └─────────────────────────┘
                    │
       ┌─────────────────────────┐
       │   READ OUT  SEQUENCE    │──── B3
       │      DEFINITION          │
       └─────────────────────────┘
                    │
       ┌─────────────────────────┐
       │   DESIGNATE START        │
       │   LINE OF SEQUENCE       │──── B4
       │      DEFINITION          │
       └─────────────────────────┘
                    │
       ┌─────────────────────────┐
       │   READ OUT DESIGNATED    │──── B5
       │   PROCESSING             │
       │   DEFINITION             │
       └─────────────────────────┘
                    │
       ┌─────────────────────────┐
       │   PS BLOCK               │──── B6
       │   FORMING DEVICE         │
       └─────────────────────────┘
                    │
       ┌─────────────────────────┐        ┌─────────────────────────┐
       │   ARRANGE FORMED         │──── B7 │   READ OUT END BLOCK    │──── B10
       │   BLOCK IN              │        │      PATTERN            │
       │   DEVELOPMENT BUFFER    │        └─────────────────────────┘
       └─────────────────────────┘                     │
                    │                       ┌─────────────────────────┐
              ◇ B8                          │   ARRANGE END BLOCK     │──── B11
            ◇   END   ◇ ── YES ──────────── │   IN DEVELOPMENT        │
            ◇   LINE  ◇                      │      BUFFER             │
              ◇  ?  ◇                        └─────────────────────────┘
                │ NO                                    │
       ┌─────────────────────────┐ B9      ┌─────────────────────────┐
       │   DESIGNATE NEXT         │        │   OUTPUT CONTENTS OF    │──── B12
       │   LINE OF SEQUENCE       │        │   DEVELOPMENT BUFFER    │
       │   DEFINITION             │        │   TO  PRINTING  UNIT    │
       └─────────────────────────┘        └─────────────────────────┘
                                                       │
                                                 ╭───────────╮
                                                 │   END     │
                                                 ╰───────────╯
```

**FIG.12**

PS BLOCK FORMING
PROCESSING

SET TITLE AND
EXECUTION PS NAME IN — C1
PROCESSING BLOCK

C2
IS
SOURCE
FILE NAME PRESENT — NO
IN A TABLE
?

YES

C3
IS
"INPUT" ABSENT — NO
IN A TABLE
?

YES C4
NO — D
TABLE
?

C9
SET INPUT
BLOCK

C10
SET SOURCE
FILE BLOCK

C11
INSERT SOURCE
FILE NAME IN
SOURCE FILE BLOCK

YES

SET DISPLAY — C5
BLOCK

C6
IS
"INDEX" PRESENT — NO
IN "CONTENTS" OF
A TABLE
?

YES

SET DISK BLOCK — C7

INSERT NAME — C8
OF INDEX FILE
IN DISK BLOCK

1

FIG.13A

25

C12    C TABLE ?    NO

YES

C13    SET UPDATING FILE BLOCK

C14    INSERT NAME OF UPDATING FILE, SET IN C TABLE, IN UPDATING FILE BLOCK

C15    E TABLE ?    NO

YES    C16

C16    SET PRINT BLOCK

END

**FIG.13B**

FIG.14

**FIG.15**

START BLOCK ST1

( START )

CONNECTION
LINE PATTERN

START BLOCK ST2

( PROCESSING )

END BLOCK ST3

( END )

DECISION BLOCK JD1

DECISION BLOCK JD2

TRUE

FALSE

DECISION BLOCK JD3

PROCESSING BLOCK

# FIG.16

| SEQUENCE DEFINITION NAME | E01 |
|---|---|

| LINE No | DEFINITION | SUB-NUMBER | TITLE CONDITION | PS NAME |
|---|---|---|---|---|
| 1 | PS | | TITLE : START FRAME | PS01 |
| 2 | (IF STATEMENT | | CONDITION : $R_1=0$ | |
| 3 | THEN | | | |
| 4 | ELSE | | | |
| 5 | ) | | | |
| 6 | PS | | TITLE : DAILY REPORT PRINTING | PS02 |
| 7 | (IF STATEMENT | | CONDITION : $R_2=9$ | |
| 8 | THEN CALL | 98 | | |
| 9 | ELSE | | | |
| 10 | ) | | | |
| 11 | PROCESSING | 98 | | |
| 12 | PS | | TITLE : RESULT DISPLAY | PS04 |

# FIG.17

FLOW CHART
FORMING
PROCESSING

CALL SEQUENCE
DEFINITION  — D1

ARRANGE START
BLOCK ON MAIN LINE
IN DEVELOPMENT
BUFFER  — D2

DESIGNATE START
LINE OF SEQUENCE
DEFINITION  — D3

WHAT
ARE DEFINITION
CONTENTS
?  — D4

D5 — PROCESSING
BLOCK FORMING
PROCESSING

PS CALL

D9 — IF
STATEMENT
PROCESSING

IF
STATEMENT

LOOP
STATEMENT

D11 — ARRANGE
END BLOCK ON
MAIN LINE IN
DEVELOPMENT
BUFFER

D12 — INSERT
"PROCESSING"
AND SUB-NUMBER
IN START
BLOCK ST2

D13 — ARRANGE
START BLOCK
ST1 ON MAIN
LINE IN
DEVELOPMENT
BUFFER

ARRANGE
PROCESSING
BLOCK ON MAIN LINE
IN DEVELOPMENT
BUFFER  — D6

D10 — LOOP
STATEMENT
PROCESSING

END
LINE
?  — D7

YES

NO

DESIGNATE
NEXT LINE
OF SEQUENCE
DEFINITION  — D8

D14 — ARRANGE END
BLOCK ON
MAIN LINE IN
DEVELOPMENT
BUFFER

OUTPUT CONTENTS OF
DEVELOPMENT BUFFER
TO PRINTING UNIT  — D15

END

**FIG.18**

PROCESSING
BLOCK FORMING
PROCESSING

READ OUT
PROCESSING
BLOCK PATTERN — E1

E2

WHAT
ARE DEFINITION
CONTENTS
?

CALL

PS    E3

E4

SET TITLE AND
EXECUTION PS NAME
IN PROCESSING
BLOCK

SET "CALL" AND
SUB-NUMBER IN
PROCESSING BLOCK

END

# FIG.19

IF STATEMENT
PROCESSING

NUMBER OF
DEFINITIONS
"PS" OR "CALL"
BELONGING TO
"THEN"—► C1 —F1

NUMBER OF
DEFINITIONS
"PS" OR "CALL"
BELONGING TO
"ELSE"—► C2 —F2

F3

$C_1 \geq C_2$ —— NO

YES  F4

ARRANGE
DECISION BLOCK
JD1 ON MAIN
LINE IN
DEVELOPMENT
BUFFER

F5

ARRANGE
DECISION BLOCK
JD2 ON MAIN
LINE IN
DEVELOPMENT
BUFFER

F6

EXCHANGE DEFINITIONS
BELONGING TO "THEN"
WITH DEFINITIONS
BELONGING TO "ELSE"

2

FIG.20A

② → **F7**

DESIGNATE DEFINITION "PS" OR "CALL" BELONGING TO "THEN"

**F8** PROCESSING BLOCK FORMING PROCESSING

**F9** ARRANGE PROCESSING BLOCK ON MAIN LINE IN DEVELOPMENT BUFFER

**F10** ARRANGE CONNECTION LINE ON SUBLINE IN DEVELOPMENT BUFFER AT POSITION TO OPPOSE PROCESSING BLOCK

**F11** ANOTHER DEFINITION BELONGING TO "THEN" ? — NO / YES

**F12** DEFINITION BELONGING TO "ELSE" ?

**F13** DESIGNATE DEFINITION "PS" OR "CALL" BELONGING TO "ELSE"

**F14** PROCESSING BLOCK FORMING PROCESSING

**F15** ARRANGE PROCESSING BLOCK ON SUBLINE IN DEVELOPMENT BUFFER

**F16** ANOTHER DEFINITION BELONGING TO "ELSE" ? — YES / NO

**F17** "END" BELONGING TO "ELSE" ? — NO / YES

**F18** CONNECT CONNECTION LINE OF SUBLINE TO LINE NEXT TO END BLOCK ON MAIN LINE

**F19** ARRANGE END BLOCK ON SUBLINE IN DEVELOPMENT BUFFER

END

**FIG.20B**

DECISION
BLOCK JD1    MAIN LINE    SUBLINE

PROCESSING
BLOCK PATTERN
FOR SUBLINE

**FIG. 21**

EP 0 510 514 A1

FIG.22

**FIG.23A**

**FIG.23B**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | AUSTRALIAN COMPUTER JOURNAL vol. 5, no. 3, November 1973, KINGSTON, AU pages 132 - 140; R. P. WATKINS: 'A survey of automatic flowchart generators' * sections 3-5; figures 3-8 * | 1-5 | G06F9/44 |
| X | AUSTRALIAN COMPUTER JOURNAL vol. 6, no. 3, November 1974, KINGSTON, AU pages 98 - 123; R. P. WATKINS: 'The design of FLOG,an automatic flowchart generator' * sections 6,7; figures 6-24 * | 1-5 | |
| A | SIGPLAN NOTICES vol. 11, no. 11, November 1976, NEW YORK, NY, US pages 58 - 64; P. ROY ET AL: 'Linear Flowchart Generator For A Structured Language' * the whole document * | 1-5 | |
| A | KILOBAUD MICROCOMPUTING vol. 5, no. 4, April 1981, PETERBOROUGH, NH, US pages 102 - 111; P. A. STARK: 'Go With The Flow' * the whole document * | 1-5 | TECHNICAL FIELDS SEARCHED (Int. Cl.5 )  G06F |
| A | PATENT ABSTRACTS OF JAPAN vol. 15, no. 115 (P-1181)19 March 1991 & JP-A-3 005 824 ( KANSAI NIPPON DENKI  SOFTWARE KK ) 11 January  1991 * abstract * | 1-5 | |

The present search report has been drawn up for all claims

| Place of search | Date of completion of the search | Examiner |
|---|---|---|
| BERLIN | 22 JULY 1992 | R. ABRAM |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)